# EUROPÄISCHE PATENTSCHRIFT

(11) **EP 4 244 004 B1**
(45) Veröffentlichungstag und Bekanntmachung des Hinweises auf die Patenterteilung: **19.03.2025**
(21) Anmeldenummer: 21798276.8
(22) Anmeldetag: 04.10.2021
(51) Int. Cl.: B22F 10/00, B23K 26/00, B23K 26/12, B23K 26/342, B23K 26/352, B23K 26/362, B23K 26/40, B41J 2/44, B41J 3/407, B41J 29/02, B41J 29/13, B23K 26/70, B23K 37/00, F16P 1/06, F16P 3/00

(54) **VORRICHTUNG ZUR BESCHRIFTUNG EINES BAUTEILS MIT EINEM MEHRTEILIGEN AUSGEBILDETEN GEHÄUSE**
DEVICE FOR MARKING A COMPONENT, COMPRISING A MULTI-PART HOUSING
DISPOSITIF DE MARQUAGE D'UN COMPOSANT, COMPRENANT UN BOÎTIER EN PLUSIEURS PARTIES

(30) Priorität: 13.11.2020 DE 102020129975
(43) Veröffentlichungstag der Anmeldung: 20.09.2023
(73) Patentinhaber: Schaeffler Technologies AG & Co. KG, 91074 Herzogenaurach (DE)
(72) Erfinder: VOLK, Wolfgang, 96158 Frensdorf (DE)
(86) Internationale Anmeldenummer: PCT/DE2021/100794
(87) Internationale Veröffentlichungsnummer: WO 2022/100778

(56) Entgegenhaltungen:
- DE-A1- 102013 018 196
- DE-A1- 102015 007 828
- JP-A- 2009 214 141
- US-A1- 2018 257 175
- US-B1- 9 216 476

## Beschreibung

Die vorliegende Erfindung betrifft eine Vorrichtung zur Beschriftung eines Bauteils, umfassend eine Lasereinrichtung zur Erzeugung eines Laserbeschriftungsstrahls, eine Auflagefläche zur Bereitstellung des zu beschriftenden Bauteils, sowie ein Gehäuse zur Umhausung eines Arbeitsbereichs zwischen Lasereinrichtung und dem zu beschriftenden Bauteil.

Aus dem Stand der Technik sind bereits verschiedene Laserbeschriftungseinrichtungen mit unterschiedlichem Aufbau und verschiedenartigen Schutzeinrichtungen bekannt.

Aus der DE 10 2010 051 539 A1 ist bereits eine Vorrichtung zur Beschriftung von Kennzeichnungsschildern bekannt. Diese Vorrichtung umfasst eine Auflagefläche für die Kennzeichnungsschilder, um diese mit einem Laserbeschriftungsgerät zu beschriften. Ferner umfasst diese Vorrichtung ein Gehäuse zum Einschließen eines aus dem Laserbeschriftungsgerät austretenden, auf die Auflagefläche gerichteten Laserstrahls, wobei das Gehäuse ein Gehäuseunterteil und eine auf oder über dem Gehäuseunterteil angeordnete Abdeckhaube aufweist. Darüber hinaus ist vorgesehen, dass die Auflagefläche auf einem um eine gehäusefeste Drehachse drehbaren Drehteller angeordnet ist, der zwischen dem Gehäuseunterteil und der Abdeckhaube angeordnet ist und seitlich über die Abdeckhaube hervorsteht und zwischen einer Beschriftungsposition, in der die Auflagefläche vollständig von der Abdeckhaube überdeckt wird, und einer Beladeposition, in der sich die Auflagefläche vollständig außerhalb der Abdeckhaube befindet, beweglich ist. Der Drehteller weist zwei sich radial von der Drehachse erstreckende, aus der Auflagefläche vorstehende Abdichtrippen auf, die in der Beschriftungsposition an einer Vorderwand der Abdeckhaube anliegen.

In der DE 100 59 246 A1 wird eine Einrichtung beschrieben, die umfasst zur Führung eines Laserstrahls auf ein zu bearbeitendes Werkstück, ein Abdichtelement, das zusammen mit dem Werkstück einen lichtdicht abgeschlossenen Innenraum bildet, und die ferner umfasst einen lichtempfindlichen Sensor, der an eine Steuereinrichtung gekoppelt ist und den Laserstrahl stoppt, wenn Licht von außen in den Innenraum eindringt.

Die US 9 216 476 B1 beschreibt eine Lasergravurvorrichtung mit einer Plattform, die einen Ladetisch in einer ersten Höhe definiert, und einer Werkzeugsäule, an der ein beweglicher Laserschlitten für eine Auf- und Abwärtsbewegung relativ zu der Plattform beweglich ist. Es ist ein vertikal einziehbares, dem Laserschlitten befestigtes Gehäuse vorgesehen.

Die US 2018 0 257 175 A1 offenbart eine Laserschweißvorrichtung mit einem Pistolenkörper und einem daran angeordneten Laserscanner, wobei eine Abschirmpistole einen vom Laserscanner erzeugten Laserstrahl abschirmt.

Die DE 10 2015 007 828 A1 beschreibt eine Schweißanordnung zum Schweißen mittels energiereicher Strahlen an einem beweglichen Arm eine Handhabungsautomaten. Die den energiereichen Strahl emittierende Einrichtung ist zumindest während des Schweißvorganges zusammen mit dem zu schweißenden Werkstück in einer Abschirmung gekapselt.

Die DE 10 2013 018 196 A1 beschreibt eine Vorrichtung zum Greifen und Transportieren eines Kennzeichnungsschildersatzes sowie ein Beschriftungssystem für Kennzeichnungsschilder mit einem Laserbeschriftungsgerät, dessen Ausgestaltung der eingangs beschriebenen DE 10 2010 051 539 A1 zu entnehmen ist.

Die JP 2009 214 141 A (beschreibend den Oberbegriff des Anspruchs 1) offenbart eine Lasermarkiervorrichtung mit einem über einen Antrieb beweglichen Drehtisch, auf dem ein Werkstück angeordnet ist. Der Drehtisch befindet sich insgesamt innerhalb eines Gehäuses, das mittels einer Schiebetür, aufweisend ein Sichtfenster, geöffnet werden kann.

Der Erfindung liegt die Aufgabe zugrunde eine Vorrichtung zur Laser-Beschriftung eines Bauteils bereitzustellen, die im Hinblick auf die Komplexität einer Schutzvorrichtung optimiert ausgebildet ist. Mit Vorteil soll darüber hinaus eine weiter verbesserte Handhabung bei zumindest gleichbleibend hohem Sicherheitsstandard gewährleistet werden.

Diese Aufgabe wird gelöst durch eine Vorrichtung zur Beschriftung eines Bauteils mit den Merkmalen des Patentanspruchs 1. Eine erfindungsgemäß ausgebildete Vorrichtung umfasst eine Lasereinrichtung zur Erzeugung eines Laserbeschriftungsstrahls für die Beschriftung des Bauteils, eine Auflagefläche zur Bereitstellung des zu beschriftenden Bauteils, sowie ein Gehäuse zur Umhausung eines Arbeitsbereichs zwischen Lasereinrichtung und dem zu beschriftenden Bauteil, so dass der Arbeitsbereich laserstrahldicht abgeschlossen ist. Das Gehäuse ist mehrteilig ausgebildet und umfasst zumindest ein erstes Gehäuseteil und ein zweites Gehäuseteil, wobei die beiden Gehäuseteile gegeneinander beweglich ausgebildet und angeordnet sind, derart, dass das Gehäuse in einer Beschickungsposition einen geöffneten Arbeitsbereich bereitstellt, so dass das zu beschriftende Bauteil in den Arbeitsbereich eingebracht werden kann, und dass das Gehäuse in einer Arbeitsposition den Arbeitsbereich vollständig laserstrahldicht verschließt. Die das zu beschriftende Bauteil tragende Auflagefläche ist in horizontaler Ebene ausgerichtet.

Erfindungsgemäß ist die Auflagefläche als ein in horizontaler Ebene drehbarer Rundtisch ausgebildet. Hierdurch wird der Vorteil erzielt, dass eine Schutzvorrichtung bereitgestellt werden konnte, welche im Hinblick auf die benötigte Anzahl von Einzelkomponenten für ein den Arbeitsbereich laserstrahldicht abschirmendes Gehäuse optimiert ist. Darüber hinaus konnte eine Vorrichtung zur Laser-Beschriftung von Bauteilen bereitgestellt werden, die sowohl im Hinblick auf ihre Handhabung als auch im Hinblick auf Arbeitssicherheit weiter optimiert werden konnte. Der Vorteil dieser Ausgestaltung liegt darin, dass eine Vorrichtung zur Laser-Beschriftung geschaffen werden konnte, welche nur wenig Bauraum benötigt und zugleich hohe Taktzahlen in der Fertigung gewährleistet.

Gemäß der Erfindung ist es vorgesehen, dass das Gehäuse zumindest noch ein drittes Gehäuseteil aufweist, wobei
- das erste Gehäuseteil feststehend ausgebildet ist und den Arbeitsraum nach oben hin abschließt oder umhaust,
- das zweite Gehäuseteil gegenüber der Arbeitsfläche und dem ersten Gehäuseteil vertikal zwischen Arbeitsfläche und erstem Gehäuseteil verschiebbar ausgebildet ist und in der Arbeitsposition einen mittleren Teil des Arbeitsbereichs umhaust, und
- das dritte Gehäuseteil auf der dem ersten und dem zweiten Gehäuseteil gegenüberliegenden Seite der Auflagefläche angeordnet ist, wobei das zweite Gehäuseteil auf seiner dem dritten Gehäuseteil zugekehrten Stirnfläche zumindest abschnittsweise erste Dichtmittel zur laserstrahldichten Abdichtung der beiden Gehäuseteile gegeneinander aufweist und das dritte Gehäuseteil auf seiner dem zweiten Gehäuseteil zugekehrten Stirnfläche zumindest abschnittsweise mit den ersten Dichtmitteln korrespondierende zweite Dichtmittel aufweist, und wobei das erste Gehäuseteil, welches ein laserstrahldichtes Sichtfenster aufweist, und das zweite Gehäuseteil oberhalb des Rundtisches angeordnet sind und dass das dritte Gehäuseteil unterhalb des Rundtisches angeordnet ist. Das dritte Gehäuseteil ist gemäß der Erfindung in eine Richtung von der Auflagefläche weg vertikal verschiebbar ausgebildet.

In dieser dreiteiligen Weiterbildung ist das zweite Gehäuseteil in vertikaler Erstreckungsrichtung als mittleres Gehäuseteil angeordnet, so dass es in der Arbeitsposition einen mittleren Teil des Arbeitsbereichs umhaust. Das dritte Gehäuseteil ist auf der dem ersten und dem zweiten Gehäuseteil gegenüberliegenden Seite der Auflagefläche angeordnet und für die Überführung in die Beschickungsposition in eine Richtung von der Auflagefläche weg vertikal verschiebbar ausgebildet. Hierdurch ist eine im Hinblick auf ihren Aufbau optimierte Umhausung geschaffen, die mit nur wenigen Gehäuseteilen die laserstrahldichte Umhausung eines Arbeitsbereichs bildet, um ein auf der Auflagefläche eines Rundtisches platziertes Bauteil für einen Laser-Beschriftungsvorgang laserstrahldicht zu umhausen.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es kann gemäß einer weiteren bevorzugten Weiterentwicklung der Erfindung auch vorgesehen sein, dass die beiden Gehäuseteile, in vertikaler Richtung gegeneinander beweglich angeordnet sind. Mit Vorteil ist das erste Gehäuseteil dabei als ein gegenüber der Lasereinrichtung oder einem Träger feststehendes Teil ausgebildet und ist das zweite Gehäuseteil als ein gegenüber dem ersten Gehäuseteil bewegliches Teil ausgebildet. Besonders bevorzugt ist dabei das zweite Gehäuseteil zumindest bereichsweise nach oben in das erste Gehäuseteil, verschiebbar ausgebildet. Das zweite Gehäuseteil kann insbesondere in Form eines nach oben und nach unten offenen Rahmenteils ausgebildet sein, während das erste Gehäuseteil beispielsweise als ein auf dem Kopf stehendes Topfteil ausgebildet sein kann. So kann bei nach oben eingeschobenem zweiten Gehäuseteil ein zu beschriftendes Bauteil unter das Gehäuse eingebracht werden und das Gehäuse durch ein vertikales Zurückverschieben nach unten laserstrahldicht verschlossen werden, indem das zweite Gehäuseteil den Arbeitsbereich zwischen Auflage und erstem Gehäuseteil verschließt. Es kann hierdurch eine konstruktiv einfache, kostengünstige und in der Handhabung optimierte Umhausung für eine Laserbeschriftungsvorrichtung bereitgestellt werden.

Das zweite Gehäuseteil, welches für die Überführung zwischen einer Arbeitsposition und einer Beschickungsposition zumindest bereichsweise in das erste Gehäuseteil einschiebbar ausgebildet ist, ist gegenüber dem ersten Gehäuseteil laserstrahldicht abgedichtet. Hierfür ist zwischen erstem Gehäuseteil und zweitem Gehäuseteil eine Dichtung zur laserstrahldichten Abdichtung der beiden Gehäuseteile ausgebildet. Mit Vorteil ist diese Dichtung als Labyrinthdichtung ausgeführt. Hierdurch wird eine konstruktiv einfache Lösung für eine laserstrahldichte Abdichtung zweier ineinander verschiebbarer Gehäuseteile geschaffen.

Nachdem das zweite Gehäuseteil auf seiner dem dritten Gehäuseteil zugekehrten Stirnfläche zumindest abschnittsweise erste Dichtmittel zur laserstrahldichten Abdichtung der beiden Gehäuseteile gegeneinander aufweist und das dritte Gehäuseteil auf seiner dem zweiten Gehäuseteil zugekehrten Stirnfläche zumindest abschnittsweise mit den ersten Dichtmitteln korrespondierende zweite Dichtmittel aufweist, sind auch hier die ersten Dichtmittel und die zweiten Dichtmittel mit Vorteil wieder in Form einer Labyrinthdichtung ausgebildet, so dass eine konstruktiv einfache und effektive Laserstrahldichtung zwischen zweiten und drittem Gehäuseteil geschaffen werden konnte.

Gemäß einer weiteren zu bevorzugenden Ausgestaltung des Erfindungsgegenstandes kann ein Positionssensor zur Detektion der Arbeitsposition vorgesehen sein. Der Positionssensor ist insbesondere derart ausgebildet, dass er die verschlossene Position zwischen dem zweiten Gehäuseteil und dem dritten Gehäuseteil im Bereich der Auflagefläche detektiert. Hierdurch kann erreicht werden, dass eine Aktivierung der Lasereinrichtung erst erfolgt, wenn das Gehäuse laserstrahldicht verschlossen ist. Ferner kann hierdurch gewährleistet werden, dass die verschlossene Position überwacht werden kann, so dass bei einem ungewollten bereichsweisen Öffnen des Gehäuses die Lasereinrichtung deaktiviert werden kann.

Schließlich kann die Erfindung auch in vorteilhafter Weise dahingehend ausgeführt sein, dass das Gehäuse zumindest eine Luftkanalöffnung für den Anschluss an ein Entlüftungs- oder Absaugsystem aufweist, wobei mit Vorteil die Luftkanalöffnung innerhalb des feststehenden ersten Gehäuseteils ausgebildet ist. Hierdurch kann mit konstruktiv einfachen Mitteln ein dauerhaft sauberer Arbeitsbereich geschaffen und eine qualitativ hochwertige Beschriftung von Bauteilen ermöglicht werden.

Bevorzugt ist zumindest eines der Gehäuseteile, besonders bevorzugt sind auch alle Gehäuseteile des Gehäuses, durch ein additives Fertigungsverfahren hergestellt ausgebildet. Mit Vorteil sind die Gehäuseteile im 3-D-Druckverfahren hergestellt ausgebildet.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.

Es zeigen:
- Figur 1: eine Laserbeschriftungsstation mit Schutzumhausung in einer Vorderansicht (links) und in einer Seitenansicht (rechts),
- Figur 2: einen vergrößerten Teilausschnitt "a" gemäß Figur 1 (oben rechts), sowie das erste Gehäuseteil der Schutzumhausung in zwei unterschiedlichen perspektivischen Ansichten (mittig und unten),
- Figur 3: eine Laserbeschriftungsstation mit einer Auflagefläche, gebildet durch einen rotierbar ausgebildeten Rundtisch, in einer Perspektivansicht mit geschlossener Schutzumhausung, und
- Figur 4: eine Laserbeschriftungsstation in einer Perspektivansicht mit geöffneter Schutzumhausung und schematisch dargestelltem zu beschriftendem Bauteil.

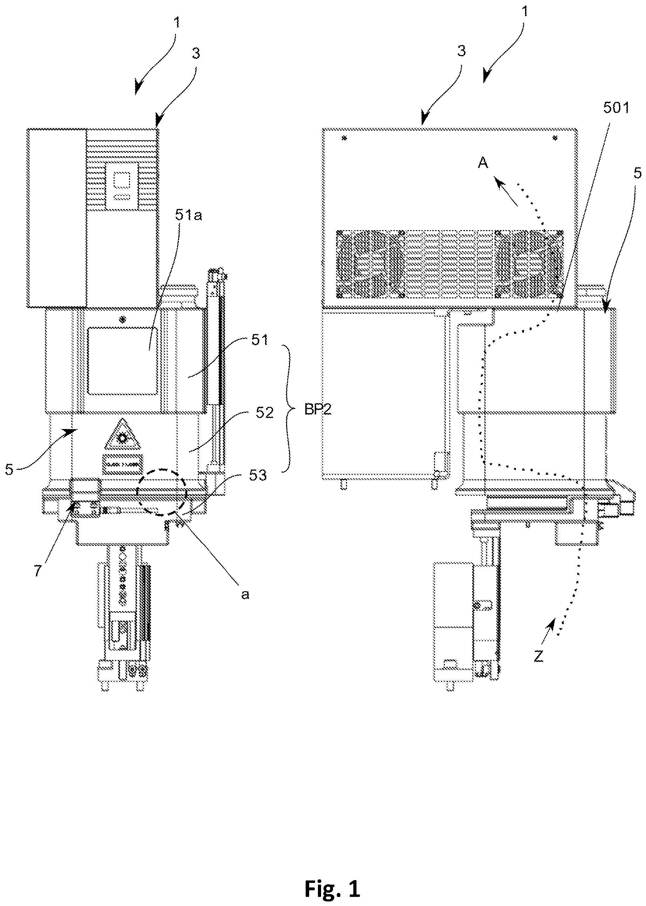

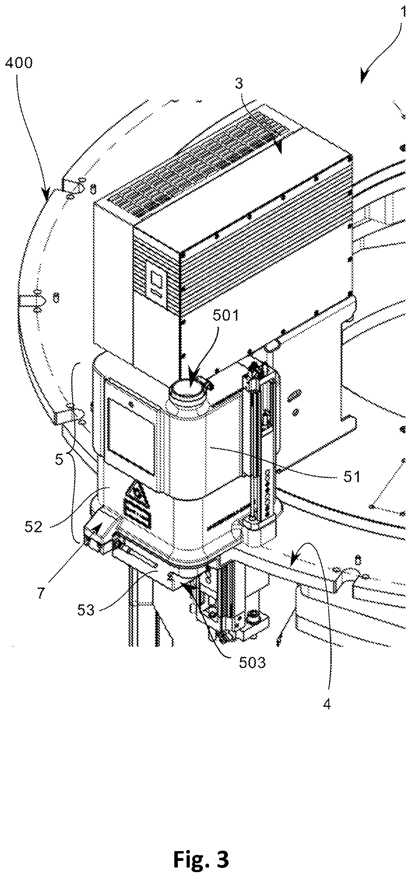

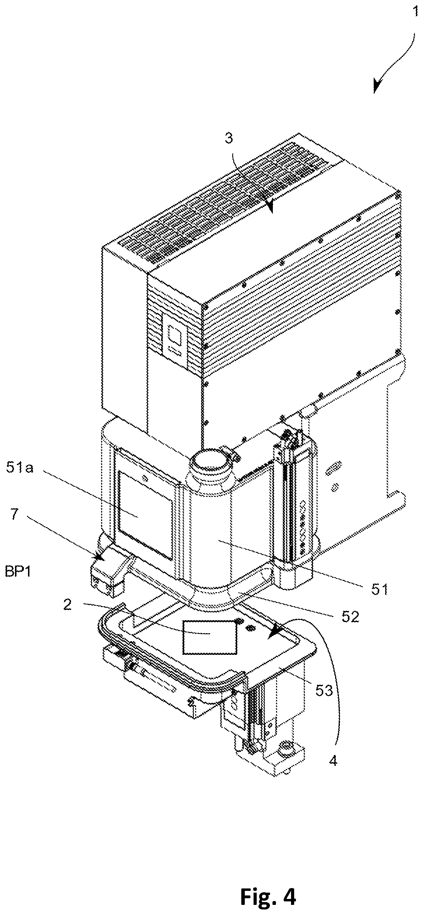

Figur 1 zeigt eine Vorrichtung 1 zur Beschriftung eines Bauteils 2 (Laserbeschriftungsstation) mit einer Schutzumhausung in einer Vorderansicht (links), sowie in einer Seitenansicht (rechts). Die gezeigte Vorrichtung 1 zur Beschriftung eines Bauteils 2 umfasst eine Lasereinrichtung 3 zur Erzeugung eines Laserbeschriftungsstrahls, eine Auflagefläche 4 (vergleiche Figur 3) zur Bereitstellung des zu beschriftenden Bauteils 2 sowie ein Gehäuse 5 in Form einer Schutzumhausung zur Umhausung eines auf der bzw. um die Auflagefläche 4 ausgebildeten Arbeitsbereichs 6 zwischen Lasereinrichtung 3 und dem zu beschriftenden Bauteil 2. Das Gehäuse 5 ist mehrteilig ausgebildet und umfasst im dargestellten Ausführungsbeispiel ein erstes (oberes) Gehäuseteil 51, ein zweites (mittleres) Gehäuseteil 52 und ein drittes (unteres) Gehäuseteil 53. Dabei sind das erste Gehäuseteil 51 und das zweite Gehäuseteil 52 in vertikaler Richtung gegeneinander beweglich ausgebildet und angeordnet, derart, dass das Gehäuse 5 in einer Beschickungsposition BP1 (siehe Figur 4) einen geöffneten Arbeitsbereich 6 bereitstellt, durch den das zu beschriftende Bauteil 2 in den Arbeitsbereich 6 eingebracht werden kann, und dass das Gehäuse 5 in einer Arbeitsposition BP2 den Arbeitsbereich 6 vollständig verschließt, so dass keinerlei Laserstrahlung aus dem durch das Gehäuse 5 umhausten Arbeitsbereich 6 austreten kann.

Die das zu beschriftende Bauteil 2 tragende Auflagefläche 4 ist in horizontaler Ebene ausgerichtet, und wie in Figur 3 gezeigt als ein in horizontaler Ebene drehbarer Rundtisch 400 ausgebildet. Die beiden Gehäuseteile 51, 52 sind in vertikaler Richtung gegeneinander beweglich angeordnet. wobei das erste Gehäuseteil 51 als ein gegenüber der Lasereinrichtung 3 feststehendes (ortsfestes) Teil ausgebildet ist, während das zweite Gehäuseteil 52 für die Überführung aus der Arbeitsposition (geschlossene Umhausung) in die Beschickungsposition BP1 (geöffnete Umhausung) zumindest bereichsweise in das erste Gehäuseteil 51 einschiebbar ausgebildet, wobei zwischen erstem Gehäuseteil 51 und zweitem Gehäuseteil 52 eine Dichtung zur laserstrahldichten Abdichtung der beiden Gehäuseteile 51, 52 gegeneinander ausgebildet ist.

Das dritte (untere) Gehäuseteil 53 ist auf der dem ersten und dem zweiten Gehäuseteil 51, 52 vertikal gegenüberliegenden Seite der Auflagefläche 4 (unterhalb der Auflagefläche des Rundtisches 400) angeordnet und in eine Richtung von der Auflagefläche 4 weg vertikal nach unten verschiebbar ausgebildet und angeordnet. Darüber hinaus ist in der rechten Darstellung schematisch der Luftstrom zur Absaugung des geschlossenen Arbeitsbereichs in einer gepunkteten Linie veranschaulicht. Dabei wird Umgebungsluft in Form von Zuluft Z durch eine Öffnung im unteren dritten Gehäuseteil 53 in den Arbeitsraum angesaugt und durch eine weitere Öffnung des Gehäuses 5 im oberen ersten Gehäuseteil 51 als Abluft A abgesaugt. Hierfür ist die Öffnung des ersten Gehäuseteils 51 mit einer entsprechenden Absaugrichtung verbindbar.

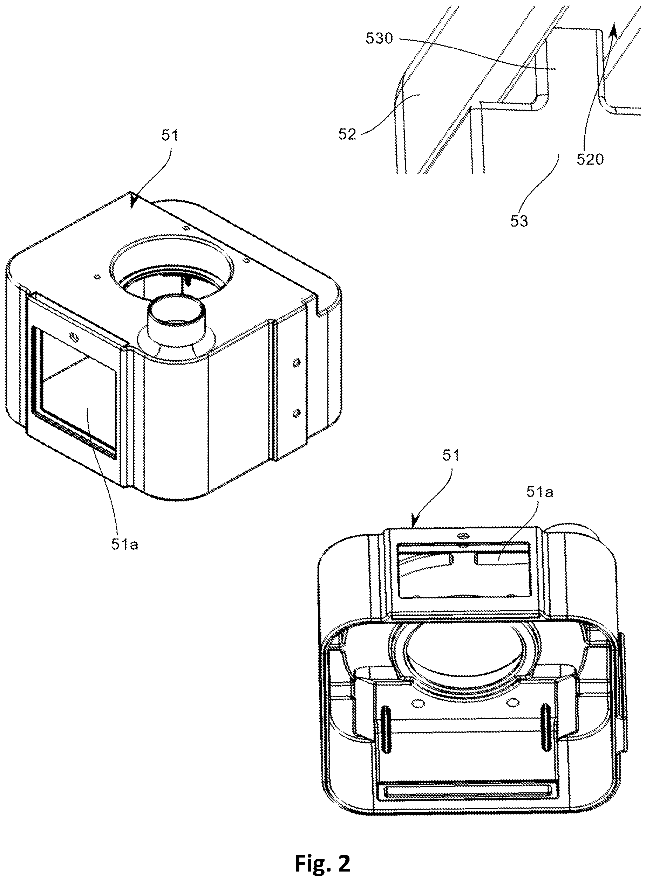

Figur 2 zeigt in der Ansicht oben rechts einen vergrößerten Teilausschnitt "a" gemäß Figur 1 sowie in der mittleren und der unteren Ansicht das erste Gehäuseteil 51 der Schutzumhausung bzw. des Gehäuses 5 in unterschiedlichen perspektivischen Ansichten. Wie in der oberen Darstellung veranschaulicht, weist das zweite Gehäuseteil 52 auf seiner dem dritten Gehäuseteil 53 zugekehrten Stirnfläche erste Dichtmittel 520 zur licht- bzw. laserstrahldichten Abdichtung der beiden Gehäuseteile 52, 53 gegeneinander auf und weist das dritte Gehäuseteil 53 auf seiner dem zweiten Gehäuseteil 52 zugekehrten Stirnfläche mit den ersten Dichtmitteln 520 korrespondierende zweite Dichtmittel 530 auf. Durch die ersten Dichtmittel 520 und die zweiten Dichtmittel 530 wird eine Labyrinthdichtung gebildet. Ferner ist gezeigt, dass das erste Gehäuseteil 51 ein laserstrahldichtes Sichtfenster 51a aufweist, über welches ein Arbeiter während des Beschriftungsvorgangs das zu beschriftende Bauteil 2 durch das Sichtfenster 51a beobachten kann.

Figur 3 zeigt die Vorrichtung 1 (Laserbeschriftungsstation) mit einer Auflagefläche 4, gebildet durch einen rotierbar ausgebildeten Rundtisch 400, in einer Perspektivansicht mit geschlossener Schutzumhausung bzw. mit geschlossenem Gehäuse 5. Dabei ist das zweite Gehäuseteil 52 vollständig nach unten aus dem ersten Gehäuseteil 51 ausgefahren und deckt das zu beschriftende Bauteil 2 laserstahldicht nach oben und zu den Seiten hin ab. Ersichtlich ist aus der Figur 3 ferner, dass ein Positionssensor 7 zur Detektion der Arbeitsposition BP2, bzw. zur Detektion ob das Gehäuse 5 sich in einem geschlossenen Zustand befindet, vorgesehen ist, wobei der Positionssensor 7 derart ausgebildet ist, dass er die verschlossene Position zwischen dem (mittleren) zweiten Gehäuseteil 52 und dem (unteren) dritten Gehäuseteil 53 detektiert. Schließlich zeigt die Figur 3 auch, dass das Gehäuse 5 im oberen ersten Gehäuseteil 51 eine erste Luftkanalöffnung 501 für den Anschluss an ein Entlüftungs- oder Absaugsystem aufweist und dass das Gehäuse 5 in seinem unteren dritten Gehäuseteil 52 eine zweite Luftkanalöffnung 503 für den Eintritt der über die erste Luftkanalöffnung 501 angesaugten Luft aufweist.

Figur 4 zeigt die Vorrichtung 1 (Laserbeschriftungsstation) in einer Perspektivansicht mit geöffneter Schutzumhausung und schematisch dargestelltem zu beschriftendem Bauteil 2. Gut zu erkennen ist in dieser Ansicht, dass das zweite mittlere Gehäuseteil 52 und das dritte untere Gehäuseteil 53 in einem vorderen Bereich über ihre korrespondierenden vertikalen Stirnflächen gegeneinander laserstrahldicht abgedichtet sind, während in einem übrigen (hinteren) Bereich die Abdichtung des zweiten Gehäuseteils 52 und des dritten Gehäuseteils 53 jeweils gegen den in diesem Bereich rotierbar angeordneten Rundtisch 400 - beispielsweise über entsprechende flexibel ausgebildete Dichtelemente - erfolgt.

Die Erfindung ist nicht auf die in den Figuren dargestellten Ausführungsformen beschränkt, sondern entsprechend dem Gegenstand der folgenden Ansprüche.

### Bezugszeichenliste

1 Vorrichtung
2 (zu beschriftendes) Bauteil
3 Lasereinrichtung
4 Auflagefläche
400 Rundtisch
5 Gehäuse
51 erstes Gehäuseteil
501 erste Luftkanalöffnung (im ersten Gehäuseteil)
51a Sichtfenster
52 zweites Gehäuseteil
520 Dichtmittel (zweites Gehäuseteil)
53 drittes Gehäuseteil
503 zweite Luftkanalöffnung (im dritten Gehäuseteil)
530 Dichtmittel (drittes Gehäuseteil)
6 Arbeitsbereich
7 Positionssensor
BP1 Beschickungsposition
BP2 Arbeitsposition
L Absaugluftstrom

## Patentansprüche

1. Vorrichtung (1) zur Beschriftung eines Bauteils (2), umfassend
- eine Lasereinrichtung (3) zur Erzeugung eines Laserbeschriftungsstrahls,
- eine Auflagefläche (4) zur Bereitstellung des zu beschriftenden Bauteils (2), wobei die Auflagefläche (4) als ein in horizontaler Ebene drehbarer Rundtisch (400) ausgebildet ist, sowie
- ein Gehäuse (5) zur Umhausung eines Arbeitsbereichs (6) zwischen Lasereinrichtung (3) und dem zu beschriftenden Bauteil (2),
**dadurch gekennzeichnet, dass**
das Gehäuse (5) mehrteilig ausgebildet ist und zumindest ein erstes Gehäuseteil (51) und ein zweites Gehäuseteil (52) umfasst, wobei die beiden Gehäuseteile (51, 52) gegeneinander beweglich ausgebildet und angeordnet sind, derart, dass das Gehäuse (5) in einer Beschickungsposition (BP1) einen geöffneten Arbeitsbereich (6) bereitstellt, durch den das zu beschriftende Bauteil (2) in den Arbeitsbereich (6) eingebracht werden kann, und dass das Gehäuse (5) in einer Arbeitsposition (BP2) den Arbeitsbereich (6) laserstrahldicht verschließt, wobei die das zu beschriftende Bauteil (2) tragende Auflagefläche (4) in horizontaler Ebene ausgerichtet ist, und, dass:
das Gehäuse (5) zumindest noch ein drittes Gehäuseteil (53) aufweist, wobei
- das erste Gehäuseteil (51) feststehend ausgebildet ist und den Arbeitsraum nach oben hin abschließt oder umhaust,
- das zweite Gehäuseteil (52) gegenüber der Arbeitsfläche (4) und dem ersten Gehäuseteil (51) vertikal zwischen Arbeitsfläche (4) und erstem Gehäuseteil (51) verschiebbar ausgebildet ist und in der Arbeitsposition (BP2) einen mittleren Teil des Arbeitsbereichs (6) umhaust, und
- das dritte Gehäuseteil (53) auf der dem ersten und dem zweiten Gehäuseteil (51, 52) gegenüberliegenden Seite der Auflagefläche (4) angeordnet ist, wobei das zweite Gehäuseteil (52) auf seiner dem dritten Gehäuseteil (53) zugekehrten Stirnfläche zumindest abschnittsweise erste Dichtmittel (520) zur laserstrahldichten Abdichtung der beiden Gehäuseteile (52, 53) gegeneinander aufweist und das dritte Gehäuseteil (53) auf seiner dem zweiten Gehäuseteil (52) zugekehrten Stirnfläche zumindest abschnittsweise mit den ersten Dichtmitteln (520) korrespondierende zweite Dichtmittel (530) aufweist, und wobei das erste Gehäuseteil (51), welches ein laserstrahldichtes Sichtfenster (51a) aufweist, über welches ein Arbeiter während des Beschriftungsvorgangs das zu beschriftende Bauteil (2) durch das Sichtfenster (51a) beobachten kann, und das zweite Gehäuseteil (52) oberhalb des Rundtisches (400) angeordnet sind und dass das dritte Gehäuseteil (53) unterhalb des Rundtisches (400) angeordnet ist,
wobei das dritte Gehäuseteil (53) in eine Richtung von der Auflagefläche (4) weg vertikal verschiebbar ausgebildet ist.

2. Vorrichtung (1) nach Anspruch 1,
**dadurch gekennzeichnet, dass**
die das erste Gehäuseteil (51) und das zweite Gehäuseteil (52) in vertikaler Richtung gegeneinander beweglich angeordnet sind.

3. Vorrichtung (1) nach einem der vorstehenden Ansprüche,
**dadurch gekennzeichnet, dass**
das erste Gehäuseteil (51) als ein gegenüber der Lasereinrichtung (3) oder einem Träger feststehendes Teil ausgebildet ist und dass das zweite Gehäuseteil (52) als ein gegenüber dem ersten Gehäuseteil (51) bewegliches Teil ausgebildet ist.

4. Vorrichtung (1) nach einem der vorstehenden Ansprüche,
**dadurch gekennzeichnet, dass**
das zweite Gehäuseteil (52) für die Überführung in die Beschickungsposition (BP1) zumindest bereichsweise in das erste Gehäuseteil (51) einschiebbar ausgebildet ist, wobei zwischen erstem Gehäuseteil (51) und zweitem Gehäuseteil (52) eine Dichtung zur laserstrahldichten Abdichtung der beiden Gehäuseteile (51, 52) gegeneinander ausgebildet ist.

5. Vorrichtung (1) nach einem der Ansprüche 1 bis 4,
**dadurch gekennzeichnet, dass**
die ersten Dichtmittel (520) und die zweiten Dichtmittel (530) in Form einer Labyrinthdichtung ausgebildet sind.

6. Vorrichtung (1) nach einem der vorstehenden Ansprüche,
**gekennzeichnet durch**
einen Positionssensor (7) zur Detektion der Arbeitsposition (BP2).

7. Vorrichtung (1) nach Anspruch 6, **dadurch gekennzeichnet, dass** der Positionssensor (7) derart ausgebildet ist, dass er die verschlossene Position zwischen dem ersten Gehäuseteil (52) und dem dritten Gehäuseteil (53) detektiert.

8. Vorrichtung (1) nach einem der vorstehenden Ansprüche,
**dadurch gekennzeichnet, dass**
das Gehäuse (5) zumindest eine Luftkanalöffnung (500) für den Anschluss an ein Entlüftungs- oder Absaugsystem aufweist, wobei die Luftkanalöffnung (500) innerhalb des feststehenden ersten Gehäuseteils (51) ausgebildet ist.

9. Vorrichtung (1) nach einem der vorstehenden Ansprüche,
**dadurch gekennzeichnet, dass**
zumindest eines der Gehäuseteile (51, 52, 53) durch ein additives Fertigungsverfahren hergestellt ausgebildet ist, insbesondere, dass das erste Gehäuseteil (51) und/oder das zweite Gehäuseteil (52) und/oder das dritte Gehäuseteil (53) im 3-D-Druckverfahren hergestellt ausgebildet sind.

## Claims

1. A device (1) for marking a component (2), comprising
- a laser device (3) for generating a laser marking beam,
- a support surface (4) for providing the component (2) to be marked, wherein the support surface (4) is designed as a rotary table (400) which can be rotated in a horizontal plane, and
- a housing (5) for enclosing a working area (6) between the laser device (3) and the component to be marked (2),
**characterised in that**
the housing (5) is multi-part in design and comprises at least a first housing part (51) and a second housing part (52), wherein the two housing parts (51, 52) are designed and arranged to be movable relative to one another, such that the housing (5) in a loading position (BP1) provides an open working area (6), through which the component (2) to be marked can be introduced into the working area (6), and that the housing (5) in a working position (BP2) closes the working area (6) in a laser beam-tight manner, wherein the support surface (4) carrying the component (2) to be marked is aligned in a horizontal plane, and that:
the housing (5) has at least a third housing part (53), wherein
- the first housing part (51) is fixed and closes off or encloses the working space at the top,
- the second housing part (52) is designed to be vertically displaceable between the working surface (4) and the first housing part (51) relative to the working surface (4) and the first housing part (51) and, in the working position (BP2), encloses a central part of the working area (6), and
- the third housing part (53) is arranged on the side of the support surface (4) opposite the first and second housing parts (51, 52), wherein the second housing part (52) has a first sealing means (520) at least in sections on its end face facing the third housing part (53) for sealing the two housing parts (52, 53) against each other in a laser beam-tight manner and the third housing part (53) has a second sealing means (530) corresponding at least in sections to the first sealing means (520) on its end face facing the second housing part (52), and wherein the first housing part (51), which has a laser beam-tight viewing window (51a), through which a worker can observe the component (2) to be marked through the viewing window (51a) during the marking process, and the second housing part (52) are arranged above the rotary table (400), and that the third housing part (53) is arranged below the rotary table (400),
wherein the third housing part (53) is designed to be vertically displaceable in a direction away from the support surface (4).

2. The device (1) according to claim 1,
**characterised in that**
the first housing part (51) and the second housing part (52) are arranged so as to be displaceable relative to one another in a vertical direction.

3. The device (1) according to any one of the preceding claims,
**characterised in that**
the first housing part (51) is designed as a part that is fixed relative to the laser device (3) or a carrier and **in that** the second housing part (52) is designed as a part that is displaceable relative to the first housing part (51).

4. The device (1) according to any one of the preceding claims,
**characterised in that**
the second housing part (52) is designed to be insertable into the first housing part (51), at least in sections, for transfer into the loading position (BP1), wherein a seal is formed between the first housing part (51) and the second housing part (52) for sealing the two housing parts (51, 52) against each other in a laser beam-tight manner.

5. The device (1) according to any one of claims 1 to 4,
**characterised in that**
the first sealing means (520) and the second sealing means (530) are designed in the form of a labyrinth seal.

6. The device (1) according to any one of the preceding claims,
**characterised by**
a position sensor (7) for detecting the working position (BP2).

7. The device (1) according to claim 6, **characterized in that** the position sensor (7) is designed such that it detects the closed position between the first housing part (52) and the third housing part (53).

8. The device (1) according to any one of the preceding claims,
**characterised in that**
the housing (5) has at least one air duct opening (500) for connection to a ventilation or extraction system, wherein the air duct opening (500) is formed within the fixed first housing part (51).

9. The device (1) according to any one of the preceding claims,
**characterised in that**
at least one of the housing parts (51, 52, 53) is produced by an additive manufacturing process, in particular that the first housing part (51) and/or the second housing part (52) and/or the third housing part (53) are produced by a 3D printing process.

## Revendications

1. Dispositif (1) de marquage d'un composant (2), comprenant
- un appareil laser (3) pour générer un faisceau de marquage laser,
- une surface d'appui (4) pour fournir le composant (2) à marquer, la surface d'appui (4) étant conçue comme une table ronde (400) qui peut tourner dans un plan horizontal, et
- un boîtier (5) pour entourer une zone de travail (6) entre l'appareil laser (3) et le composant (2) à marquer,
**caractérisé en ce que**
le boîtier (5) est conçu en plusieurs parties et comprend au moins une première partie de boîtier (51) et une deuxième partie de boîtier (52), les deux parties de boîtier (51, 52) étant conçues et agencées pour être mobiles l'une par rapport à l'autre, de sorte que le boîtier (5), dans une position de chargement (BP1), fournit une zone de travail (6) ouverte à travers laquelle le composant (2) à marquer peut être introduit dans la zone de travail (6), et de sorte que le boîtier (5) dans une position de travail (BP2) ferme la zone de travail (6) de manière étanche au faisceau laser, la surface d'appui (4) portant le composant (2) à marquer étant alignée dans le plan horizontal, et **en ce que** :
le boîtier (5) présente au moins encore une troisième partie de boîtier (53),
- la première partie de boîtier (51) étant conçue de manière fixe et clôturant ou entourant l'espace de travail vers le haut,
- la deuxième partie de boîtier (52) étant conçue pour être verticalement mobile entre la surface de travail (4) et la première partie de boîtier (51) par rapport à la surface de travail (4) et à la première partie de boîtier (51) et entourant une partie centrale de la zone de travail (6) dans la position de travail (BP2), et
- la troisième partie de boîtier (53) étant agencée du côté de la surface d'appui (4) opposé aux première et deuxième parties de boîtier (51, 52), la deuxième partie de boîtier (52) présentant sur sa face frontale tournée vers la troisième partie de boîtier (53), au moins par sections, des premiers moyens d'étanchéité (520) pour le scellement étanche au faisceau laser des deux parties de boîtier (52, 53) l'une contre l'autre et la troisième partie de boîtier (53) présentant sur sa face frontale tournée vers la deuxième partie de boîtier (52), au moins par sections, des seconds moyens d'étanchéité (530) correspondant aux premiers moyens d'étanchéité (520), et la première partie de boîtier (51), qui présente une fenêtre de visualisation (51a) étanche au faisceau laser, à travers laquelle un ouvrier peut observer le composant (2) à marquer pendant le processus de marquage par la fenêtre de visualisation (51a), et la deuxième partie de boîtier (52) étant agencées au-dessus de la table ronde (400) et **en ce que** la troisième partie de boîtier (53) est agencée sous la table ronde (400),
la troisième partie de boîtier (53) étant conçue pour pouvoir être déplacée verticalement dans une direction s'éloignant de la surface d'appui (4).

2. Dispositif (1) selon la revendication 1,
**caractérisé en ce que**
la première partie de boîtier (51) et la deuxième partie de boîtier (52) sont agencées pour être mobiles l'une par rapport à l'autre dans la direction verticale.

3. Dispositif (1) selon l'une quelconque des revendications précédentes,
**caractérisé en ce que**
la première partie de boîtier (51) est conçue comme une partie fixe par rapport à l'appareil laser (3) ou à un support et **en ce que** la deuxième partie de boîtier (52) est conçue comme une partie mobile par rapport à la première partie de boîtier (51).

4. Dispositif (1) selon l'une quelconque des revendications précédentes,
**caractérisé en ce que**
la deuxième partie de boîtier (52) est conçue pour pouvoir être insérée au moins partiellement dans la première partie de boîtier (51) pour le transfert dans la position de chargement (BP1), un joint d'étanchéité étant formé entre la première partie de boîtier (51) et la deuxième partie de boîtier (52) pour assurer l'étanchéité au faisceau laser des deux parties du boîtier (51, 52) l'une par rapport à l'autre.

5. Dispositif (1) selon l'une des revendications 1 à 4,
**caractérisé en ce que**
les premiers moyens d'étanchéité (520) et les seconds moyens d'étanchéité (530) sont conçus sous la forme d'un joint labyrinthe.

6. Dispositif (1) selon l'une quelconque des revendications précédentes,
**caractérisé par**
un capteur de position (7) pour détecter la position de travail (BP2).

7. Dispositif (1) selon la revendication 6, **caractérisé en ce que** le capteur de position (7) est conçu de façon à détecter la position fermée entre la première partie de boîtier (52) et la troisième partie de boîtier (53).

8. Dispositif (1) selon l'une quelconque des revendications précédentes,
**caractérisé en ce que**
le boîtier (5) présente au moins une ouverture de conduit d'air (500) pour le raccordement à un système de ventilation ou d'aspiration, l'ouverture de conduit d'air (500) étant conçue à l'intérieur de la première partie de boîtier (51) fixe.

9. Dispositif (1) selon l'une quelconque des revendications précédentes,
**caractérisé en ce que**
au moins une des parties de boîtier (51, 52, 53) est produite par un procédé de fabrication additive, en particulier **en ce que** la première partie de boîtier (51) et/ou la deuxième partie de boîtier (52) et/ou la troisième partie de boîtier (53) sont produites par procédé d'impression 3D.
